# EUROPÄISCHE PATENTSCHRIFT

(11) **EP 3 894 603 B1**
(45) Veröffentlichungstag und Bekanntmachung des Hinweises auf die Patenterteilung: **25.10.2023**
(21) Anmeldenummer: 20733808.8
(22) Anmeldetag: 22.06.2020
(51) Int. Cl.: C21D 1/673, C21D 8/02, C21D 9/46, C22C 18/04, C22C 38/04, C22C 38/12, C22C 38/14, C22C 38/22, C23C 2/06, C23C 2/28, C23C 2/40

(54) **VERFAHREN ZUR HERSTELLUNG EINES BESCHICHTETEN STAHLFLACHPRODUKTS, VERFAHREN ZUR HERSTELLUNG EINES STAHLBAUTEILS UND BESCHICHTETES STAHLFLACHPRODUKT II**
METHOD FOR PRODUCING A COATED STEEL FLAT PRODUCT, METHOD FOR PRODUCING A STEEL COMPONENT AND COATED STEEL FLAT PRODUCT II
PROCÉDÉ POUR FABRIQUER UN PRODUIT PLAT EN ACIER REVÊTU, PROCÉDÉ POUR FABRIQUER UNE PIÈCE D'ACIER ET PRODUIT PLAT EN ACIER REVÊTU

(30) Priorität: 27.06.2019 WO PCT/EP2019/067230
(43) Veröffentlichungstag der Anmeldung: 20.10.2021
(73) Patentinhaber: ThyssenKrupp Steel Europe AG, 47166 Duisburg (DE)
(72) Erfinder: SCHULZ, Jennifer, 59427 Unna (DE); KÖYER, Maria, 44141 Dortmund (DE)
(74) Vertreter: Zenz Patentanwälte Partnerschaft mbB
(86) Internationale Anmeldenummer: PCT/EP2020/067290
(87) Internationale Veröffentlichungsnummer: WO 2020/260178

(56) Entgegenhaltungen:
- EP-A1- 1 857 566
- EP-A1- 2 703 515
- WO-A1-2008/102012
- WO-A1-2017/012958
- WO-A1-2017/020965
- DE-A1-102017 103 308

## Beschreibung

Die Erfindung betrifft ein Verfahren zur Herstellung eines beschichteten Stahlflachprodukts, ein Verfahren zur Herstellung eines Stahlbauteils aus dem beschichteten Stahlflachprodukt sowie ein beschichtetes Stahlflachprodukt.

Unter dem Begriff des Stahlflachprodukts sind insbesondere Stahlbänder und Stahlbleche zu verstehen.

Das Beschichten von Stahlflachprodukten mit einer größtenteils aus Zink, kurz: Zn, bestehenden Beschichtung ist in der Technik bekannt.

In der jüngeren Vergangenheit wurde erkannt, dass die Zugabe von geringen Mengen Magnesium, kurz: Mg, und/oder Aluminium, kurz: Al, in eine Zn-Beschichtung zu einer vorteilhaften Kombination von Korrosionsschutz und guten Verarbeitungseigenschaften führt. Ein Beispiel einer Beschichtung aus dem Zn-Mg-Al-Elementesystem für ein Stahlflachprodukt ist der EP 2 055 799 A1 zu entnehmen.

Ein Verfahren zum Warmumformen von hochfestem Stahl ist in der WO 2008/102012 A1 beschrieben.

Ein Verfahren zur Herstellung eines mittels Feuerverzinkens beschichteten Stahls ist der WO 2006/002843 A1 zu entnehmen.

Eine hohe und noch weiter zunehmende Bedeutung in vielen Bereichen der Technik, insbesondere im Automobilbereich, haben Bauteile, die aus warmumgeformtem Stahl bestehen. Diese werden beispielsweise erhalten, indem ein Stahlband oder eine Stahlplatine auf eine Temperatur oberhalb der AC3-Temperatur erwärmt wird und sodann in einem Umformwerkzeug oder in mehreren Umformwerkzeugen sowohl umgeformt als auch abgekühlt wird. Mittels Warmumformung von Stahl erhaltene Bauteile weisen den Vorteil einer Eigenschaftskombination aus hoher Festigkeit und gleichzeitig vorhandener ausreichender Zähigkeit bei relativ geringen Blechdicken auf. Aufgrund einer derartigen Eigenschaftskombination werden derartige Bauteile beispielsweise im Karosseriebereich eines Fahrzeugs verwendet, wobei vor dem Hintergrund des zunehmend wichtigen Wunschs nach möglichst leichten Karosserien die Bedeutung der warmumgeformten Stahlbauteile in Zukunft wohl hoch bleiben wird oder sogar noch wachsen wird.

Dadurch, dass im Automobilbereich üblicherweise nur veredelte Bleiche Einsatz finden, besteht die Anforderung, dass Beschichtungen von Stahlflachprodukten den bei der Warmumformung herrschenden Bedingungen in ausreichendem Maße widerstehen. Insbesondere wird an die Beschichtung die Anforderung gestellt, während der Warmumformung an dem Stahlflachprodukt durchgängig zu haften. An das fertige Bauteil wird die Anforderung gestellt, dass die Beschichtung rissfrei oder nahezu rissfrei vorliegt.

Die Aufgabe, welche der Erfindung zugrunde liegt, besteht darin, ein Stahlflachprodukt bereitzustellen, welches den erläuterten Anforderungen in ausreichendem Maße genügt.

Die Aufgabe wird mit einem Verfahren zur Herstellung eines beschichteten Stahlflachprodukts mit den Merkmalen des Anspruchs 1 gelöst. Die Aufgabe wird weiterhin mit einem Verfahren zur Herstellung eines Stahlbauteils mit den Merkmalen des Anspruchs 7 sowie mit einem beschichteten Stahlflachprodukt mit den Merkmalen des Anspruchs 9 gelöst.

Das erfindungsgemäße Verfahren zur Herstellung eines beschichteten Stahlflachprodukts weist die folgenden Schritte auf:
Zunächst wird ein als Substrat dienendes, unbeschichtetes, Stahlflachprodukt bereitgestellt. Das Stahlflachprodukt besteht aus den folgenden Elementen:

| | |
|---|---|
| 0,005-0,38 | C, |
| 0,05-0,4 | Si, |
| 0,05-1,4 | Mn, |
| 0,0005-0,03 | P, |
| 0,002-0,025 | S, |
| 0,002-0,015 | Al, |
| 0-0,1 | Nb, |
| 0-0,5 | Cr + Mo, |
| 0,001-0,15 | Ti, |
| 0-0,005 | B, |

Rest Fe sowie unvermeidbare Verunreinigungen. Die angegebenen Zahlenwerte bezeichnen den Gehalt des entsprechenden Elements in dem Stahlflachprodukt in Gewichtsprozent, kurz:
Gew.-%. Das Stahlflachprodukt besteht also aus den vorliegenden Elementen in den genannten Spannen, dem Rest zu 100 Gew-% Fe sowie Verunreinigungen innerhalb der Grenzen, in denen sie unvermeidbar und/oder nicht nachweisbar sind.

Die Auswahl des Kohlenstoffgehalts, kurz: C-Gehalts, erfolgte aufgrund der Anforderung, nach einer Warmumformung eine hohe Festigkeit bereitstellen zu können.

Silizium, kurz: Si, wurde in einem Gehalt zulegiert, welcher in ausreichendem Maß eine Festigkeitssteigerung durch Mischkristallverfestigung und außerdem die Stabilisierung von Austenit durch Ferritbildung bewirkt. Der maximale Siliziumgehalt wurde auf 0,4 Gewichtsprozent festgelegt, um nachteilige Auswirkungen auf die Haftung der Beschichtung an dem Substrat, insbesondere des Zn-Anteils der Beschichtung, infolge der Bildung von Siliziumoxid zu vermeiden.

Mangan, kurz: Mn, wurde zur Begünstigung der Entschwefelung des Stahls zugegeben. Die obere Grenze ist wiederum vor dem Hintergrund einer gewünschten Vermeidung von Oxidbildung in ausreichendem Maß gewählt.

Die Zugabe von geringen Phosphorgehalten zwischen 0,0005 Gew.-% und 0,03 Gew.-% dient der Verbesserung der Härtbarkeit durch Erhöhung von Mischkristallverfestigung. Die vergleichsweise geringe obere Grenze des Phosphorgehalts wurde zur weitgehenden Vermeidung von Korngrenzenversprödung gewählt.

Der Schwefelgehalt, kurz: S-Gehalt, ausreichend gering bemessen, um eine nachteilige Bildung von Mangansulfit zu verhindern.

Ein Aluminiumgehalt zwischen 0,002 Gew.-% und 0,015 Gew.-% dient der Bindung von im Eisen gelöstem Sauerstoff und Stickstoff durch Bildung von Aluminiumoxiden und Aluminiumnitriden. Aufgrund des ebenfalls im Stahl vorhandenen Titans und dessen geringerer Bindungsenthalpie zu Stickstoff hin wird der Aluminiumgehalt bei 0,015 Gew.-% begrenzt.

Die optionale Zugabe von Niob, kurz Nb, dient der Kornfeinung. Die optionale Zugabe von Bor, kurz: B, dient der Verbesserung der Härtbarkeit bei geringen Mengen, wobei zur Vermeidung von nachteiliger Grobkornbildung der Borgehalt auf 0,005 Gew.-% begrenzt ist.

Chrom und Molybdän, kurz: Cr beziehungsweise Mo, können optional Verbesserung der Härtbarkeit zugegeben werden. Die Perlit- und die Bainitbildung wird zu längeren Zeiten im ZTU-Schaubild geschoben, außerdem wird die die Martensit-StartTemperatur gesenkt. Aus Kostengründen wird der Gehalt der Summe von Chrom und Molybdän auf 0,5 Gew.-% begrenzt.

Der Rest des Stahls besteht, wie eingangs bereits erwähnt, aus Eisen sowie unvermeidbaren Verunreinigungen.

Es können insbesondere Stähle verwendet werden, welche eine Streckgrenze Rₑ zwischen 200 und 600 MPa, eine Zugfestigkeit Rₘ zwischen 300 und 800 MPa sowie eine Bruchdehnung A₈₀ zwischen 3 % und 30 % aufweist.

Das bereitgestellte Stahlflachprodukt wird erfindungsgemäß mittels Feuerverzinkens in einem Metallbad beschichtet.

Das erfindungsgemäß verwendete Metallbad besteht aus den folgenden Elementen:
0,5-1,6 Gew.-% Mg,
0,5-1,6 Gew.-% Al,

Rest Zn sowie unvermeidbare Verunreinigungen. Erfindungsgemäß ist bei dem Verfahren xAl - xMg > 0,3, wobei xAl der Gewichtsprozentanteil von Al ist und xMg der Gewichtsprozentanteil von Mg ist.

Das Feuerverzinken bezeichnet ein Verfahren, das synonym auch als "Beschichten mit einer zinkbasierten Legierung mittels Schmelztauchverfahrens" bekannt ist. Das Feuerverzinken erfolgt in an sich bekannter Weise, jedoch mit der erfindungsgemäß gewählten Maßgabe für die Elementzusammensetzung des Metallbads. Das flüssige Metallbad mit der Zn-Mg-Al-Schmelze wird auf eine Temperatur zwischen 400 bis 470 Grad Celsius gebracht, das Stahlflachprodukt wird zum Beschichten in das Bad hineingefahren, und abschließend wird die Schichtdicke in einem an sich bekannten Verfahrensschritt eingestellt, wenn das beschichtete Stahlflachprodukt aus dem Metallbad austritt, nämlich beispielsweise mit Hilfe von Abstreifdüsen.

Der Aluminiumgehalt des Metallbads beträgt erfindungsgemäß wenigstens 0,5 Gew.-%, damit sich am Übergang zwischen Substrat und dem durch das Feuerverzinken hergestellten Überzug eine geschlossene Grenzlage ausbildet. Es hat sich nämlich herausgestellt, dass in dem Fall, dass in ausreichender Weise Aluminium bereitgestellt wird, die im Metallbad vorliegenden Temperaturen ausreichen, um die Bildung einer flächendeckenden Grenzschicht herbeizuführen, die unmittelbar auf dem Substrat vorliegt und vorwiegend aus intermetallischen Al-Fe-Phasen besteht. Diese Al-Fe-Grenzschicht sorgt unter anderem aufgrund ihrer vergleichsweise hohen Zähigkeit für eine gute Haftung der Beschichtung auf dem Substrat. Es hat sich außerdem herausgestellt, dass mit zunehmendem Aluminiumgehalt die Grenzschicht feiner wird, das heißt, dass mit zunehmendem Aluminiumgehalt ein Mittelwert der in der Grenzschicht vorliegenden Kristallitgrößen kleiner wird.

Bis zu einem gewissen Grad sind geringere Kristallitgrößen von Vorteil, da durch diese eine Korngrenzenoxidation erschwert und dadurch in ihrem Ausmaß verringert wird. Auch eine Versprödung durch Eindringen von Flüssigzink in das Substrat hinein wird insbesondere bei kleinen Kristallitgrößen wirkungsvoll vermieden. Bei weiter ansteigenden Aluminiumgehalten, insbesondere bei Gehalten größer 2,0 Gewichtsprozent, überwiegt demgegenüber nach einer Warmumformung die nachteilige Gefahr einer verstärkten Wasserstoffaufnahme durch das Substrat und daraus folgender Wasserstoffversprödung sowie die nachteilige Diffusion von Fe in den Überzug und/oder von Zn in das Substrat hinein. Ein weiterer Nachteil von über 2,0 Gew.-% Al-Gehalt ist die Begünstigung der Oxidbildung an der Oberfläche der Beschichtung, was nach der Warmumformung wiederum nachteilig für die Verwendung des beschichteten Stahlflachprodukts in der Automobilindustrie ist, da die dort erforderliche Widerstandspunktschweißeignung des Stahlflachprodukts durch nichtleitende Oxidschichten verhindert oder zumindest verschlechtert wird.

Der Magnesiumgehalt in der Schmelze fördert die Bildung einer Mg-Al-O-Spinell-Oberfläche, welche trotz ihres Sauerstoffgehalts noch ausreichend für das Widerstandspunktschweißen eine Eignung bildet. Ein gewisser Mg-Mindestgehalt von erfindungsgemäß 0,5 Gew.-% ist daher erforderlich.

Eine obere Grenze des Mg-Gehalts von 2,0 Gew.-% ist erforderlich, um die Bildung von spröden magnesiumreichen Mischphasen zu vermeiden, die sich als nachteilig mit Hinblick auf die Rissbildung der Beschichtung erwiesen haben.

Insgesamt hat sich herausgestellt, dass die erfindungsgemäß gewählte Kombination aus Stahlzusammensetzung und aus Beschichtung eine gut vor Korrosion schützende Beschichtung mit guter Haftung der Beschichtung auf dem Substrat während der Warmumformung, einer geringen Rissanfälligkeit beim Warmumformen, einer gute Eignung zur Kaltumformung mit insbesondere guter Wirkung auf die Standzeit des Umformwerkzeugs, das heißt insbesondere zu einem geringeren Verschleiß im Umformwerkzeug führend, sowie mit einer zur Verwendung in der Automobilindustrie befähigenden Widerstandspunktschweißeignung einhergeht. Ein Grund für diese positive Eigenschaftskombination ist die Art der sich bildenden Oxidschicht in Zusammenwirkung mit der zwischen Beschichtung und Substrat sich bildenden Grenzschicht.

Da, wie bereits erwähnt, eine hervorragende Eignung des beschichteten Stahlflachprodukts zum Kaltumformen vorliegt, sieht eine Weiterbildung des erfindungsgemäßen Verfahrens vor, dass das nach dem Feuerverzinken erhaltene beschichtete Stahlflachprodukt in einem nachfolgenden Schritt mittels Kaltumformens in eine Zwischengeometrie gebracht wird und erst danach ein Warmumformen zur Herstellung eines Stahlbauteils mittels Warmumformens erfolgt. Dadurch kann insbesondere die Notwendigkeit der Anzahl von Umformschritten und/oder des Umformgrads bei nachfolgenden Warmumformschritten verringert werden.

Die Badtemperatur des Metallbades beim Feuerverzinken beträgt bevorzugt zwischen 450 Grad Celsius und 470 Grad Celsius. Vor Eintritt in das Bad wird das Stahlflachprodukt bevorzugt, wie bei Feuerverzinken üblich und dem Fachmann geläufig, mittels Glühens vorgewärmt auf die Austenitisierungstemperatur und auf die Badtemperatur.

In durchgeführten Experimenten hat sich gezeigt, dass besonders vorteilhafte Ergebnisse erhalten werden, wenn der Aluminiumgehalt in Gewichtsprozent größer oder gleich dem Magnesiumgehalt in Gewichtprozent ist. Besonders gute Ergebnisse werden erreicht, wenn der Aluminiumgehalt 0,3 Gewichtsprozent oder mehr, insbesondere 0,5 Gewichtsprozent oder mehr, größer ist als der Magnesiumgehalt in Gewichtsprozent.

Konkret haben sich für den Magnesiumgehalt im Metallbad bevorzugte Werte zwischen 0,6 Gew.-% und 1,6 Gew.-%, besonders bevorzugt zwischen 0,6 Gew.-% und 1,1 Gew.-% ergeben und für den Aluminiumgehalt zwischen 0,8 Gew.-% und 1,6 Gew.-%, bevorzugt zwischen 1,1 Gew.-% und 1,6 Gew.-% ergeben.

Gemäß einer speziellen Ausführungsvariante wird beim Verfahrensschritt des Feuerverzinkens die Schichtdicke nach Austritt des Stahlflachprodukts aus dem Metallbad zu höchstens 5 Mikrometer Schichtdicke eingestellt. Im Anschluss an das Feuerverzinken und das Einstellen der Schichtdicke wird in dieser Ausführungsvariante ein Glühen des feuerverzinkten Stahlflachprodukts vorgenommen.

Bevorzugt wird das Glühen als Galvannealing-Schritt unmittelbar nach dem Feuerverzinken mit diesem als Inline-Prozessschritt durchgeführt.

Das Glühen wird bevorzugt bei einer Temperatur zwischen 540 Grad und 720 Grad für einen Zeitraum zwischen 10 s und 60 s durchgeführt. In der Konstellation, dass Beschichtungen mit höchstens 5 Mikrometern Schichtdicke vorliegen und das beschichtete Stahlflachprodukt nach dem Feuerverzinken einem Glühen unterzogen wird, führt dies zu einer Diffusion von Eisen in die Beschichtung hinein. Bei den bevorzugt vorliegenden Temperaturen wurde bebachtet, dass der Eisengehalt in der Gew.-% wenigstens 5 Gew.-% betrug, wobei bevorzugt die Temperatur und der Zeitraum des Glühens derart eingestellt werden, dass ein Eisengehalt über 15 Gew.-% in der Beschichtung erreicht wird. Dadurch, dass in der Beschichtung ein Anteil an Eisen von wenigstens 5 Gew.-% vorhanden ist, wird der Schmelzpunkt der Zn-Mg-Al-Beschichtung erhöht. Als Folge des erhöhten Schmelzpunkts wird die Bildung von Flüssigphase vermieden oder in ihrem Ausmaß reduziert, wodurch das Ausmaß an nachteiliger Flüssigphasenversprödung reduziert wird, wodurch bei gleichbleibend tolerierter Rissanfälligkeit die Anwendung von höheren Temperaturen bei der Warmumformung ermöglicht werden.

Alternativ kann aber auch vorgesehen sein, nach dem Feuerverzinken und vor einem Warmumformen oder Halbwarmumformen, was selbstverständlich jeweils das Erwärmen für das Warmumformen oder Halbwarmumformen umfasst, des Stahlflachprodukts kein gezieltes Glühen mehr vorzunehmen, sodass zwischen Feuerbeschichtung und Erwärmen für das Warmumformen oder Halbwarmumformen kein anderes Glühen des beschichteten Stahlflachprodukts mehr stattfindet.

Ausgehend von einem Stahlflachprodukt, das nach einem der vorher beschriebenen Verfahren oder seiner Weiterbildungen hergestellt wird, kann insbesondere ein Stahlbauteil mit einer vorteilhaften Korrosionsschutzbeschichtung hergestellt werden. Hierzu wird ein mit einem der beschriebenen Verfahren erhaltenes Stahlflachprodukt mittels Warmumformens in die gewünschte Geometrie des Stahlbauteils gebracht wird. Das Warmumformen erfolgt dabei bevorzugt bei einer Temperatur des Stahlflachprodukts zwischen AC3 und AC3+(60 Grad Celsius), wobei die Formgebung bevorzugt bei Halten der Temperatur oberhalb von AC3 erfolgt und nach Ende der Formgebung ein Abschrecken in einem Umformwerkzeug oder in zwei Umformwerkzeugen, letzteres durch sequentielles Umformen, durchgeführt wird. Das Halten der Temperatur oberhalb AC3 erfolgt bis zur Temperaturhomogenisierung des Stahlflachprodukts, bevorzugt für 3 bis 15 Minuten, besonders bevorzugt bei Schnellaufheizmethoden 5 bis 180 Sekunden.

Gemäß einer Alternative kann das Stahlflachprodukt nach dem Erwärmen auf eine Temperatur zwischen AC3 und AC3+(60 Grad Celsius) auf eine Zwischentemperatur abgekühlt werden, die zwischen 400 und 600 Grad Celsius liegt, bevorzugt zwischen 450 und 550 Grad Celsius, wobei das Umformen bei der Zwischentemperatur startend durchgeführt wird mit anschließendem Abschrecken im Umformwerkzeug. Das Abkühlen auf die Zwischentemperatur kann beispielsweise mittels Abkühlen, in Luft, Flüssigkeit oder Suspension erfolgen. Dadurch, dass die Zwischentemperatur sich im Bereich der oder unterhalb von 0,4 x Schmelztemperatur in Kelvin befindet, wird bei diesem Verfahren nicht mehr von einem klassischen Warmumformen gesprochen, weswegen im Rahmen dieser Anmeldung mit dem Begriff des Halbwarmumformen auf es Bezug genommen wird. Die gemäß dieser Vorgehensweise durchgeführte Vorgehensweise ist insbesondere bei Schichtdicken oberhalb von 5 Mikrometer tauglich und führt zu einer Verbesserung des kathodischen Korrosionsschutzes aufgrund der Tatsache, dass zinkreiche Phasen erhalten werden, die dann den kathodischen Korrosionsschutz verbessern bei gleichzeitiger Beibehaltung der Rissminimierung. Durch die zinkreichen Phasen kann im Korrosionsprozess ausreichend Zink als Opferelement bereitgestellt werden, das dadurch einen kathodischen Korrosionsschutz herbeiführt.

Die Erfindung betrifft außerdem ein beschichtetes Stahlflachprodukt, welches mit einem der eingangs beschriebenen Verfahren oder eines seiner Weiterbildungen erhältlich ist.

Erfindungsgemäß weist das Stahlflachprodukt nach dem Feuerverzinken und vor einem eventuellen Glühen zwischen dem Substrat und einer bei dem Feuerverzinken auf dem Substrat aufgebrachten Zn-Mg-Al-Schicht eine geschlossene Zwischenschicht auf, bei der ein mittlerer Kristallkorndurchmesser von 0,20 Mikrometern oder weniger vorliegt. Der mittlere Kristallkorndurchmesser bezeichnet denjenigen mittleren Kristallkorndurchmesser welcher mit der folgenden Vorgehensweise erhalten wird: Dazu wird eine als Platte mit einer Oberfläche 25 x 15 mm² ausgebildete, mit einem erfindungsgemäßen oder gemäß Weiterbildung der Erfindung beschichtete, Probe derart mit Salpetersäure angebeizt, dass die metallische Veredelung in Lösung geht. Durch die Salpetersäure werden Fe₂-Al₅-Kristallkörner weitgehend nicht angegriffen, sondern nur Zn-Anteile entfernt. Mittels FE-Rasterelektronenmikroskopie wird die so präparierte Probenoberfläche bei einer Vergrößerung von 50000X optisch untersucht. Hierzu werden zehn zufällig ausgewählte Kristalle ausgemessen, wobei jeweils die größte laterale Erstreckung in der zweidimensionalen Abbildung der einzelnen Kristalle verwendet wird. Aus den zehn erhaltenen Durchmessern wird ein Mittelwert gebildet. Die Schichten sind dann erfindungsgemäß, wenn dieser Mittelwert 0,20 Mikrometer oder weniger beträgt.

Es hat sich nämlich herausgestellt, dass bei Kristallkorndurchmessern unterhalb dieses Werts der jeweils größte beobachtete Riss der Beschichtung, der bis zum Substrat reicht, immer innerhalb des tolerierten Intervalls zwischen Null Mikrometern und tolerierter Maximalrisslänge lag. Daraus wurde auf eine gute Eignung der Proben zur Warmumformung geschlossen. Siehe hierzu auch die weiter unten beschriebene Versuchsdurchführung.

Besonders gute Eigenschaften hatten Stahlflachprodukte mit einer Zwischenschicht, die unmittelbar nach dem Feuerverzinken, das heißt vor einem nach dem Feuerverzinken gegebenenfalls durchgeführten Erwärmen, dem Zusammenhang y ≤ 0,155 * x^(-1,1) genügten, wobei x der Al-Gehalt in der Schmelze in Gew.-% und y der mittlere Kristallkorndurchmesser in der Zwischenschicht gemäß obiger Ermittlungsweise ist.

In einer besonders bevorzugten Ausführungsform besteht die Zwischenschicht zu einem Gewichtsanteil von wenigstens 80 Gew.-%, bevorzugt wenigstens 90 Gew.-%, besonders bevorzugt wenigstens 98 Gew.-% aus Fe2Al5-Kristallen.

In einer weiteren bevorzugten Ausführung beträgt die Dicke der Grenzschicht mindestens 50 nm, besonders bevorzugt mindestens 100 nm, um die Bildung spröder Eisen-Zink-Phasen zu verhindern.

In einer weiteren bevorzugten Ausführung beträgt die Dicke der Grenzschicht höchstens 600 nm, bevorzugt höchstens 400 nm, besonders bevorzugt höchstens 200 nm. Durch Grenzschichtdicken von höchstens 600 nm, bevorzugt höchstens 400 nm, besonders bevorzugt höchstens 200 nm, kann eine gute Überzugshaftung besonders sicher eingestellt werden.

Oberhalb der Grenzschicht weist der Überzug keine weitere, abgrenzbaren metallische Schichten insbesondere keine Zwischenschicht auf.

Besonders vorteilhafte Eigenschaftskombinationen ergeben sich bei Stahlflachprodukten, die mit einem der eingangs erläuterten Verfahren hergestellt sind und nach dem Feuerverzinken und nach dem Glühen eine Gesamtbeschichtung aufweisen, welche aus der Zn-Mg-Al-Schicht und einer zwischen dem Substrat und der Zn-Mg-Al-Schicht vorliegenden Zwischenschicht besteht, wobei der Fe-Gewichtsanteil an der Gesamtbeschichtung zwischen 5 Gewichtsprozent und 15 Gewichtsprozent liegt.

Im Rahmen der Entwicklung der beschriebenen Erfindung wurden Versuche durchgeführt mit Proben aus den nachfolgend genannten Stahlzusammensetzungen:

**Tabelle 1**

| Lfd. Nr. | C | Si | Mn | P | S | Al | Nb | Ti | B |
|---|---|---|---|---|---|---|---|---|---|
| A | 0,23 | 0,38 | 1,3 | 0,020 | 0,007 | 0,013 | - | 0,03 | 0,004 |
| B | 0,08 | 0,33 | 0, 95 | 0,025 | 0,020 | 0,013 | 0,09 | 0,010 | 0,005 |
| C | 0,38 | 0,37 | 1,38 | 0,020 | 0,008 | 0,013 | - | 0,10 | 0,005 |
| D | 0,24 | 0,30 | 1,3 | 0,022 | 0,008 | 0,012 | - | 0,02 | 0,004 |
| E | 0,19 | 0,38 | 1,32 | 0,022 | 0,008 | 0,012 | - | 0,02 | 0,005 |
| F | 0,20 | 0,35 | 1,35 | 0,020 | 0,008 | 0,012 | - | 0,02 | 0,004 |
| G | 0,14 | 0,25 | 1,07 | 0,010 | 0,001 | 0,08 | 0,025 | 0,010 | 0,002 |

In der ersten Zeile der Tabelle sind mit Ausnahme der ersten Spalte die einzelnen Elemente angegeben, in den Spalten sind mit Ausnahme der ersten Spalte die Gehalte der Elemente in Gew.-%, Rest Fe und unvermeidbare Verunreinigungen. Die erste Spalte umfasst eine laufende Bezeichnung der verwendeten Stähle.

Stahlband der angegebenen Zusammensetzungen wurden mittels einer an sich bekannten Feuerverzinkung beschichtet. Zur Feuerverzinkung wurde zunächst eine Erwärmung der einzelnen Proben auf eine Temperatur von 455 Grad Celsius durchgeführt und sodann das Stahlband in ein Schmelzbad mit der Schmelzbadtemperatur von 455 Grad Celsius eingeführt. Es wurden die folgenden Zusammensetzungen des Schmelzbads gewählt:

**Tabelle 2**

| Schmelzbad, lfd. Bezeichnung | Mg | Al |
|---|---|---|
| Z1 | 1,1 | 1,6 |
| Z2 | 0,6 | 1,1 |
| Z3 | 0,8 | 0,8 |
| Z4 | 1,1 | 1,1 |
| Z5* | 0,8 | 0,4 |

Die zweite Spalte und die dritte Spalte umfasst den jeweiligen Mg-Gehalt beziehungsweise Al-Gehalt der Schmelzen Z1 bis Z5 in Gew.-%, Rest Zn und unvermeidbare Verunreinigungen.

Versuche wurden mit den folgenden Kombinationen aus Stahl und Schmelzbadzusammensetzungen durchgeführt:

**Tabelle 3, * bezeichnet nicht erfindungsgemäßen Versuch**

| Versuch Nr. | Stahl | Schmelzbad | Schichtdicke in Mikrometern | Kristallkorndurchmesser in der Legierungsschicht in Mikrometern, ∅ 10-Messungen |
|---|---|---|---|---|
| 1 | A | Z1 | 3 | 0,09 |
| 2 | B | Z2 | 5 | 0,20 |
| 3 | C | Z3 | 7 | 0,14 |
| 4 | D | Z4 | 7 | 0,20 |
| 5 | E | Z1 | 5 | 0,09 |
| 6 | F | Z1 | 10 | 0,09 |
| 7 | G | Z3 | 5 | 0,14 |
| 8 | H | Z4 | 10 | 0,20 |
| 9 | A | Z5* | 3 | 0,42 |
| 10 | A | Z5* | 10 | 0,42 |

Beispiel Z3 und Z4 sind nicht Erfindungsgemäss.

Deshalb sind Versuchs Nr. 3,4,7 und 8 auch nicht Erfindungsgemäss.

Es wurden zehn Kombinationen aus Stählen A bis H und Metallbadzusammensetzungen Z1 bis Z5 hergestellt, wobei das Stahlband nach dem Feuerverzinken nicht mehr geglüht wurde und nach dem langsamen Abkühlen auf Raumtemperatur der mittlere Kristallkorndurchmesser in der Legierungsschicht ermittelt wurde.

Der mittlere Kristalldurchmesser wurde mit der folgenden Vorgehensweise ermittelt: Die Beschichtung wird mit rauchender Salpetersäure abgebeizt. Durch die Salpetersäure werden Fe₂-Al₅-Kristallkörner weitgehend nicht angegriffen, sondern nur Zn-Anteile entfernt. Mittels Rasterelektronenmikroskopie wird die so präparierte Probe bei einer Vergrößerung von 50000X optisch untersucht. Hierzu werden zehn zufällig ausgewählte Kristalle ausgemessen, wobei jeweils die größte laterale Erstreckung in der zweidimensionalen Abbildung der einzelnen Kristalle verwendet wird. Aus den zehn erhaltenen Durchmessern wird ein Mittelwert gebildet.

Wie sich herausstellte, ist der Kristallkorndurchmesser in dem Fall, dass die Schmelzzusammensetzung Z5 gewählt wurde, oberhalb eines Kristallkorndurchmessers von 0,20 Mikrometern und korreliert mit einem nachteiligen Verhalten beim Warmumformen in Gestalt von einer Bildung von das Substrat freilegenden Rissen oberhalb einer akzeptierten Gesamtlänge in der Ebene des Substrats von höchstens 10 Mikrometern für den längsten beobachteten Riss. Die Länge eines Risses ist dabei definiert als Länge von Eintritt des Risses in den Stahl bis zur Rissspitze. Diese Definition reicht zur Bewertung der Risse aus, da alle Risse näherungsweise gerade sind. Aus diesem Grund sind die Versuche Nr. 9 und 10 nicht erfindungsgemäß.

Die Umformeignung für Warmumformprozesse wurde das mit dem obigen Verfahren beschichtete Stahlband hergestellt, aus diesem Platinen gefertigt, die dann einstufig und mit einer Kaltumformung in eine Zwischenform umgeformt werden. Das so gefertigte Werkstück wird dann mittels Warenträger durch einen Ofen verfahren und in diesem für 5 Minuten auf oberhalb AC3-Temperatur, in diesem Fall bei 880 Grad Celsius, geglüht und sodann abschließend in einem formgebenden Werkzeug abgeschreckt. Das Substrat wird auf Risse untersucht und der längste beobachtete Riss ermittelt. Die Ergebnisse sind der nachfolgenden Tabelle zu entnehmen:

| Versuch Nr. | Ofenverweilzeit in s | Umformeignung kalt | Umformeignung warm | Risse ins Substrat |
|---|---|---|---|---|
| 1 | 60 | Ja | Ja | <3 µm |
| 2 | 90 | Ja | Ja | <5 µm |
| 3 | 120 | Ja | Ja | <7 µm |
| 4 | 130 | Ja | Ja | <7 µm |
| 5 | 75 | Ja | Ja | <3 µm |
| 6 | 135 | Ja | Ja | <6 µm |
| 7 | 105 | Ja | Ja | <5 µm |
| 8 | 220 | Ja | Ja | <10 µm |
| 9* | 120 | ja | Nein | > 15 µm |
| 10* | 240 | ja | Nein | > 20 µm |

Wie der Tabelle zu entnehmen ist, weist keine der Proben 1 bis 8 Risse ins Substrat von 10 oder mehr Mikrometern Länge in der Substratebene auf. Lediglich Proben 9 und 10 weisen Risse von mindestens 10 Mikrometern auf, es handelt sich dadurch bei Proben 9 und 10 um nicht erfindungsgemäße Proben. Das Reinreichen von Rissen in das Substrat hinein wird von den Erfindern auf zu große Kristallkorndurchmesser an der Grenzfläche der Beschichtung zu dem Substrat zurückgeführt, die Proben sind demnach nicht erfindungsgemäß.

## Patentansprüche

1. Verfahren zur Herstellung eines beschichteten Stahlflachprodukts, aufweisend die nachfolgenden Schritte:
A) Bereitstellen eines Stahlflachprodukts als Substrat, das Stahlflachprodukt bestehend aus den folgenden in Gewichtsprozent, kurz: Gew.-%, angegebenen Elementen:
| | |
|---|---|
| 0,005-0,38 | C, |
| 0,05-0,4 | Si, |
| 0,05-1,4 | Mn, |
| 0,0005-0,03 | P, |
| 0,002-0,025 | S, |
| 0,002-0,015 | Al, |
| 0-0,1 | Nb, |
| 0-0,5 | Cr + Mo, |
| 0,001-0,15 | Ti, |
| 0-0,005 | B, |
Rest Fe sowie unvermeidbare Verunreinigungen;
B) Feuerverzinken des Stahlflachprodukts in einem Metallbad, bestehend aus den folgenden in Gewichtsprozent, kurz: Gew.-%, angegebenen Elementen:
| | |
|---|---|
| 0,5-1,6 | Mg, |
| 0,5-1,6 | Al, |
Rest Zn sowie unvermeidbare Verunreinigungen,
wobei xAl - xMg > 0,3, wobei xAl der Gewichtsprozentanteil von Al ist und xMg der Gewichtsprozentanteil von Mg ist.

2. Verfahren nach Anspruch 1, wobei das in Schritt B) erhaltene Stahlflachprodukt in einem Schritt C) mittels eines Kaltumformens in eine Zwischengeometrie gebracht wird.

3. Verfahren nach einem der vorhergehenden Ansprüche, wobei xAl - xMg >= 0,5.

4. Verfahren nach einem der vorhergehenden Ansprüche, wobei das Metallbad die folgenden in Gewichtsprozent, kurz: Gew.-%, angegebenen Elemente aufweist:
0,6-1,6 Mg, bevorzugt 0,6-1,1 Mg;
0,8-1,6 Al, bevorzugt 1,1-1,6 Al.

5. Verfahren nach einem der vorhergehenden Ansprüche, wobei beim Feuerverzinken des Schritts B) die Schichtdicke zu höchstens 5 Mikrometer Schichtdicke eingestellt wird, wobei im Anschluss an das Feuerverzinken ein Glühen des feuerverzinkten Stahlflachprodukts durchgeführt wird.

6. Verfahren nach Anspruch 5, wobei das Glühen bei einer Temperatur zwischen 540 Grad und 720 Grad für einen Zeitraum zwischen 10 s und 60 s durchgeführt wird.

7. Verfahren zur Herstellung eines Stahlbauteils, wobei ein mit einem Verfahren nach einem der Ansprüche 1 bis 6 erhaltenes beschichtetes Stahlflachprodukt mittels Warmumformens oder mittels Halbwarmumformens in die gewünschte Geometrie des Stahlbauteils gebracht wird.

8. Verfahren nach Anspruch 7, wobei
- das Stahlflachprodukt in die gewünschte Geometrie mittels Warmumformens gebracht wird, wobei die Warmumformung bei einer Temperatur des Stahlflachprodukts zwischen AC3 und AC3+60 Grad Celsius startend durchgeführt wird mit anschließendem Abschrecken im Umformwerkzeug oder
- das Stahlflachprodukt in die gewünschte Geometrie mittels Halbwarmumformens gebracht wird, wobei das Stahlflachprodukt auf eine Temperatur zwischen AC3 und AC3+60 Grad Celsius erwärmt wird, ein Abkühlen auf eine Zwischentemperatur zwischen 400 und 600 Grad Celsius, bevorzugt 450 und 550 Grad Celsius, erfolgt und das Halbwarmumformen bei der Zwischentemperatur startend durchgeführt wird mit Abschrecken im Umformwerkzeug während und/oder nach dem Halbwarmumformen.

9. Beschichtetes Stahlflachprodukt, erhältlich mit einem Verfahren nach einem der Ansprüche 1 bis 6,
wobei nach dem Feuerverzinken und vor einem eventuellen Glühen zwischen dem Substrat und einer bei dem Feuerverzinken auf dem Substrat aufgebrachten Zn-Mg-Al-Schicht eine geschlossene Zwischenschicht vorliegt, aufweisend einen mittleren Kristallkorndurchmesser von 0,20 Mikrometern oder weniger, wobei die Zwischenschicht zu einem Gewichtsanteil von wenigstens 80 Gew.-%, bevorzugt wenigstens 90 Gew.-%, besonders bevorzugt wenigstens 98 Gew.-%, aus Fe2Al5-Kristallen besteht.

10. Stahlflachprodukt gemäß Anspruch 9, erfüllend die Ungleichung y ≤ 0,155 * x^(-1,1) mit x: Al-Gehalt in der Schmelze in Gew.-% und y: mittlerer Kristallkorndurchmesser.

11. Stahlflachprodukt gemäß Anspruch 9 oder Anspruch 10, wobei die Dicke der Zwischenschicht mindestens 50 nm, besonders bevorzugt mindestens 100 nm, sowie höchstens 600 nm, bevorzugt höchstens 400 nm, besonders bevorzugt höchstens 200 nm, beträgt.

12. Stahlflachprodukt nach einem der Ansprüche 9 bis 11, wobei das in Schritt B) erhaltene Stahlflachprodukt in einem Schritt C) mittels eines Kaltumformens in eine Zwischengeometrie gebracht wird.

## Claims

1. Method for producing a coated steel flat product including the following steps:
A) Providing a steel flat product as substrate, the steel flat product consisting of the following elements, listed in percent by weight, abbreviated to: wt%:
| | |
|---|---|
| 0.005-0.38 | C, |
| 0.05-0.4 | Si, |
| 0.05-1.4 | Mn, |
| 0.0005-0.03 | P, |
| 0.002-0.025 | S, |
| 0.002-0.015 | Al, |
| 0-0.1 | Nb, |
| 0-0.5 | Cr + Mo, |
| 0.001-0.15 | Ti, |
| 0-0.005 | B, |
remainder Fe and unavoidable contaminants;
B) Hot-dip galvanising the steel flat product in a metal bath consisting of the following elements, listed in percent by weight, abbreviated to: wt%:
| | |
|---|---|
| 0.5-1.6 | Mg, |
| 0.5-1.6 | Al, |
remainder Zn and unavoidable contaminants,
wherein xAl - xMG > 0.3, wherein xAl is the percentage by weight of Al, and xMg is the percentage by weight of Mg.

2. Method according to Claim 1, wherein in a step C) the steel flat product obtained in step B) is formed into an intermediate geometry.

3. Method according to one of the preceding claims, wherein xAl - xMg >= 0.5.

4. Method according to any one of the preceding claims, wherein the metal bath contains the following elements, listed in percent by weight, abbreviated to: wt%:
0.6-1.6 Mg, preferably 0.6-1.1 Mg;
0.8-1.6 Al, preferably 1.1-1.6 Al.

5. Method according to one of the preceding claims, wherein during the hot-dip galvanising of step B) the coating thickness is adjusted to not more than 5 micrometres, wherein following the hot-dip galvanising the galvanised steel flat product undergoes an annealing process.

6. Method according to Claim 5, wherein the annealing is carried out at temperature between 540 degrees and 720 degrees for a period between 10 s and 60 s.

7. Method for producing a steel flat product, wherein a coated steel flat product obtained with a method according to one of Claims 1 to 6 is formed into the desired geometry of the steel product by means of hot forging or semi-hot forging.

8. Method according to Claim 7, wherein
- the steel flat product is formed into the desired geometry by means of hot forging, wherein the hot forging is carried out starting at a temperature of the steel flat product between AC3 and AC3+60 degrees Celsius with subsequent quenching in the forming die, or
- the steel flat product is formed into the desired geometry by means of semi-hot forging, wherein the steel flat product is heated to a temperature between AC3 and AC3+60 degrees Celsius, cooling is carried out to an intermediate temperature between 400 and 600 degrees Celsius, preferably between 450 and 550 degrees Celsius, and the semi-hot forging is carried out starting at the intermediate temperature with quenching in the forming die during and/or after the semi-hot forging.

9. Coated steel flat product obtainable with a method according to any one of Claims 1 bis 6,
wherein after the hot-dip galvanising and before any annealing process, a closed intermediate layer having an average crystal grain diameter of 0.20 micrometres or less is present between the substrate and a layer of Zn-Mg-Al applied to the substrate during the hot-dip galvanisation, wherein at least 80 wt%, preferably at least 90 wt%, particularly preferably at least 98 wt% of the intermediate layer consists of Fe2A15 crystals.

10. Steel flat product according to Claim 9, satisfying the inequation y ≤ 0.155 * x^ (-l.l) where x: Al content of the melt in wt%, and y: average crystal grain diameter.

11. Steel flat product according to Claim 9 or Claim 10,
wherein the thickness of the intermediate layer is at least 50 nm, particularly preferably at least 100 nm, and not more than 600 nm, preferably not more than 400 nm, particularly preferably not more than 200 nm.

12. Steel flat product according to any one of Claims 9 to 11,
wherein in a step C) the steel flat product obtained in step B) is formed into an intermediate geometry by means of a cold forming process.

## Revendications

1. Procédé, destiné à fabriquer un produit en acier plat revêtu, comportant les étapes suivantes consistant à :
A) mettre à disposition un produit en acier plat en tant que substrat, le produit en acier plat étant constitué des éléments suivants, mentionnés en pourcentages en poids, abréviation : % en poids :
| | |
|---|---|
| de 0,005 à 0,38 | de C, |
| de 0,05 à 0,4 | de Si, |
| de 0,05 à 1,4 | de Mn, |
| de 0,0005 à 0,03 | de P, |
| de 0,002 à 0,025 | de S, |
| de 0,002 à 0,015 | d'Al, |
| de 0 à 0,1 | de Nb, |
| de 0 à 0,5 | de Cr + Mo, |
| de 0,001 à 0,15 | de Ti, |
| de 0 à 0,005 | de B, |
un reste de F, ainsi que des impuretés inévitables,
B) galvaniser le produit en acier plat dans un bain de métal, constitué des éléments suivants, mentionnés en pourcentages en poids, abréviation : % en poids :
| | |
|---|---|
| de 0,5 à 1,6 | de Mg, |
| de 0,5 à 1,6 | d'Al, |
un reste de Zn, ainsi que des impuretés inévitables,
xAl - xMg étant > 0,3, xAl étant la part de pourcentage en poids d'Al et xMg étant la part de pourcentage en poids de Mg.

2. Procédé selon la revendication 1, dans une étape C), le produit en acier plat obtenu à l'étape B) étant amené dans une géométrie intermédiaire par formage à froid.

3. Procédé selon l'une quelconque des revendications précédentes, xAl - xMg étant >= 0,5.

4. Procédé selon l'une quelconque des revendications précédentes, le bain de métal comportant les éléments suivants, mentionnés en pourcentages en poids, abréviation : % en poids :
de 0,6 à 1,6 de Mg, de préférence de 0,6 à 1,1 de Mg ;
de 0,8 à 1,6 d'Al, de préférence de 1,1 à 1,6 d'Al.

5. Procédé selon l'une quelconque des revendications précédentes, lors de la galvanisation à l'étape B), l'épaisseur de couche étant réglée à un maximum d'épaisseur de couche de 5 micromètres, à la suite de la galvanisation, un recuit du produit en acier plat galvanisé étant réalisé.

6. Procédé selon la revendication 5, le recuit étant réalisé à une température comprise entre 540 degrés et 720 degrés pour une période comprise entre 10 secondes et 60 secondes.

7. Procédé, destiné à fabriquer une pièce en acier, un produit en acier plat revêtu obtenu avec un procédé selon l'une quelconque des revendications 1 à 6 étant amené dans la géométrie souhaitée pour la pièce en acier au moyen d'un formage à chaud ou au moyen d'un formage à tiède.

8. Procédé selon la revendication 7,
- le produit en acier plat étant amené dans la géométrie souhaitée au moyen d'un formage à chaud, le formage à chaud étant réalisé en démarrant à une température du produit en acier plat comprise entre AC3 et AC3+60 degrés Celsius, avec une trempe consécutive dans l'outil de formage, ou
- le produit en acier plat étant amené dans la géométrie souhaitée au moyen d'un formage à tiède, le produit en acier plat étant chauffé à une température comprise entre AC3 et AC3+60 degrés Celsius, un refroidissement à une température intermédiaire comprise entre 400 et 600 degrés Celsius, de préférence entre 450 et 550 degrés Celsius étant effectué, et le formage à tiède étant réalisé en démarrant à la température intermédiaire, avec une trempe dans l'outil de formage, avant et / ou pendant le formage à tiède.

9. Produit en acier plat revêtu, susceptible d'être obtenu avec un procédé selon l'une quelconque des revendications 1 à 6,
après la galvanisation et avant un recuit éventuel, une couche intermédiaire fermée, comportant un diamètre moyen des grains cristallins de 0,20 micromètres ou moins étant présente entre le substrat et une couche de Zn-Mg-Al appliquée sur le substrat lors de la galvanisation, la couche intermédiaire étant constituée à raison d'une part en poids d'au moins 80 % en poids, de préférence, d'au moins 90 % en poids, de manière particulièrement préférentielle, d'au moins 98 % en poids de cristaux de Fe₂Aₗ₅.

10. Produit en acier plat selon la revendication 9, satisfaisant à l'inéquation y ≤ 0,155 * x^(-1,1) avec x : teneur en Al dans la masse fondue, en % en poids et y : diamètre moyen des grains cristallins.

11. Produit en acier plat selon la revendication 9 ou la revendication 10, l'épaisseur de la couche intermédiaire étant d'au moins 50 nm, de manière particulièrement préférentielle, d'au moins 100 nm, et d'au plus 600 nm, de préférence d'au plus 400 nm, de manière particulièrement préférentielle, d'au plus 200 nm.

12. Produit en acier plat selon l'une quelconque des revendications 9 à 11, dans une étape C), le produit en acier plat obtenu à l'étape B) étant amené dans une géométrie intermédiaire au moyen d'un formage à froid.
